# EUROPEAN PATENT SPECIFICATION

(11) **EP 3 624 621 B1**
(45) Date of publication and mention of the grant of the patent: **30.10.2024**
(21) Application number: 18724893.5
(22) Date of filing: 16.05.2018
(51) Int. Cl.: A41B 9/12, A41D 31/00, B32B 5/02, B32B 5/16

(54) **GARMENTS**
KLEIDUNGSSTÜCKE
VÊTEMENTS

(30) Priority: 16.05.2017 GB 201707866
(43) Date of publication of application: 25.03.2020
(73) Proprietor: Body Agent Ltd, London N1 7GU (GB)
(72) Inventor: NICOLSON, Tamara, London N1 7GU (GB)
(74) Representative: Dehns
(86) International application number: PCT/EP2018/062819
(87) International publication number: WO 2018/210976

(56) References cited:
- DE-U1- 202006 011 163
- DE-U1- 202006 011 163
- GB-A- 2 458 210

## Description

The present disclosure relates to a garment for filtering body odours, to use of the garment, and to activated carbon.

Activated carbon is known as a filter in numerous industries for being very effective at adsorbing certain substances. Activated carbon fabric has been used to filter out the smells from flatulence, as disclosed in EP 224 9671. For example, underwear containing activated carbon fabric is available under the trade mark "Shreddies". The odour filtering material comprises a carbon fibre layer, laminated on each side with cotton mesh, whereby the odour filtering material has three layers. This odour filtering material is added as an insert between two panels of elastane and cotton mix material that form the inner and outer surfaces of the underwear, so that the garment has up to five layers, and at least 3 layers. The insert has a thickness of about 0.9 mm and the total thickness of the odour filtering part of the underwear including the insert and the two panels on each side thereof is about 1.9 mm. The rest of the underwear uses regular underwear materials (e.g. cotton). The underwear is sewn around the crotch area, where the elastane-cotton material joins to it. The inserted fabric layer for filtering out flatulence odours extends from the elastic waistband at the back to the front so that any gases produced by the wearer should have to pass through the activated carbon fabric before reaching the outside world. The activated carbon fabric is intended to adsorb the chemicals associated with the smell of flatulence and the underwear thereby aims to allow people to pass gas more discretely, saving embarrassment.

DE 20 2006 011163 U1 discloses a garment according to the preamble of claim 1.

The invention provides a garment for filtering body odour of a person, the garment comprising an odour filtering material forming the inside of the garment, the odour filtering material consisting of:
an activated carbon layer;
a first fabric layer bonded to one side of the activated carbon layer; and
a second fabric layer bonded to an opposite side of the activated carbon layer;
wherein the thickness of the odour filtering material is equal to or less than 0.8 mm; and wherein the odour filtering material is configured to stretch by 20% or more in at least one direction when tested as follows:
a 50 mm width by 100 mm length sample of odour filtering material is weighted with a 2 kg load that is applied along the length of the sample to stretch the sample.

This stretch test is in accordance with BS4952:1992 RESIDUAL EXTENSION.

By using in the garment an odour filtering material with a thickness which is equal to or less than 0.8 mm it is possible for the garment to be very effective in filtering odours whilst still being comfortable and unobtrusive. The high extensibility is important for the comfort and usability of the garment. Having the three layers bonded together to form an activated carbon composite material improves the ease of handling and assembly of the garment (e.g. for stitching).

Preferably, the garment has a thickness of 0.7 mm and is configured to stretch by 40% or more in at least one direction when tested as described above.

The garment may be made in numerous forms, including underwear, shorts, socks, a sports top, etc. The garment may be one of: a top, shorts, underwear, a sock, a sports bra, and a one-piece suit configured to cover from thigh to neck to upper arm of a wearer. It is envisaged that the garment will be particularly useful for use as sportswear.

The odour filtering material may be used in a greater range of garments than are possible with materials used in existing underwear due to its ability to be made in a reduced thickness and with greater flexibility. For example, the present material is suitable for garments that need to accommodate a wider range of movement than conventional underwear, e.g. sports tops.

The mass per unit area of the odour filtering material may be equal to or less than 280 g/m² and preferably equal to or less than 250 gsm. A relatively low mass per unit area contributes to a high comfort level and low obtrusiveness.

Preferably, the odour filtering material is configured to stretch by 60% or less when tested as stated. Thus it may stretch by between 20% and 60% when tested, more preferably by between 40% and 50%, and still more preferably, by between 45% and 50%.

Because the odour filtering material forms the inside of the garment, there is no extra layer attached inwardly of the odour filtering material. This is in contrast with the known Shreddies^{™} underwear, in which the odour filtering material is enclosed in a protective pouch made from separate layers of cloth material, whereby the inner and outer layers and the odour filtering material must be aligned before stitching into a garment, and also with the result that any stretchiness of the odour filtering material may be negated by the presence of the inner and outer layers.

The odour filtering material may form both the inside and the outside of the garment. Thus the odour filtering material may form the only material between a user and the outside, making it suitable as a replacement for conventional underwear or sportswear, for example. The total thickness of the garment, from inside to outside, may thus be that of the odour filtering material, whereby a relatively thin and extensible garment is provided.

The first and second fabric layers may be made of various different fabrics conventionally used for clothing. The first fabric layer may be a polyamide fabric layer, and/or the second fabric layer may be a polyamide fabric layer. Use of a polyamide as one or both of the fabric layers of the odour filtering material may result in a relatively thin and flexible and stretchable material, thereby improving garment comfort.

The polyamide may be a nylon.

The garment may comprise at least one elasticated portion for sealing the odour filtering material to the person's body. If the odour filtering material extends over substantially the entire garment then an elasticated portion may be provided at an edge of the garment, such as at a hole for a neck, an arm and/or a leg. If the odour filtering material is connected to another material forming part of the garment, such as a shoulder portion extending over a person's shoulder in the case of a top, then an elasticated portion may be provided between the odour filtering material and such other material.

The garment may comprise a flexible fabric material connected to an edge of the odour filtering material, the flexible fabric material being configured to provide additional flexibility in a region of the garment. The region may be a shoulder region. The region may be an outer thigh region.

In some embodiments, the odour filtering material may make up more than 50% of the total surface area of the garment. The odour filtering material may make up more than 60% of the total surface area of the garment. The odour filtering material may make up more than 75% of the total surface area of the garment. The "total surface area of the garment" is intended to mean the area forming the outside of the garment.

By providing embodiments in which the odour filtering material is breathable, the garments can be suitable for wearing under clothing with minimal or no discomfort.

The test in relation to the stretchability of the odour filtering material may be defined more specifically as follows. The 50 mm width by 100 mm length sample of odour filtering material is loaded up to a 2 kg load applied along the length of the sample in the length direction at a rate of 500 mm/min . Once the 2 kg load is reached, the load is cycled down to zero at the same rate of 500 mm/min and then back up to the 2 kg load at the same rate of 500 mm/min. Then the elongation of the sample of the odour filtering material is measured and converted into a percentage based on the original sample length of 100 mm.

The invention also provides a method of filtering body odour by using a garment as disclosed herein. Such a method can be viewed as a non-therapeutic method, for example when used to filter body odour caused by sports or other strenuous activity.

Some people suffer from excessive body odour. In some cases, excessive body odour results from genetic disorders that cause patients to produce excessive and/or excessively pungent body odour. For example, Trimethylaminuria ("TMAU") can also result in body malodour. TMAU comes in two forms: Type 1 which is genetic, and inherited - caused by FM03 enzyme deficiency - and Type 2 which is mainly non-genetic, and can be caused by organ or gut dysfunction. TMAU is also known as "fish-odour syndrome" wherein the body odour of some sufferers has a distinct odour of rotting fish, though other sufferers complain of fecal or other unpleasant and/or offensive odours emanating from their bodies.

Sufferers of TMAU often suffer severe psychological distress due to their odour, in particular receiving unpleasant comments in public spaces and being socially rejected. Some sufferers also have to adapt to a lifestyle involving showering several times per day, or find that they must live very isolated lives as a result of the disorder, which can have damaging effects on their mental and physical health, work life, home life, and ability to travel.

The present garment does not prevent the production of body odour, but prevents the body odour from being noticed by either the patient or other people in the vicinity. In particular, the term "body odour" is used herein to denote the perception, by the wearer or by others, of odorous chemicals produced by the wearer's body. Thus, a reduction in body odour means a reduction in the perception of the odorous chemicals.

The reduction of perception of body odour arises from the odorous chemicals being filtered by the activated carbon material, such that the concentration of said chemicals on the far side of the filter from the user's body is reduced. Preferably, the concentration of odours chemicals is reduced to levels imperceptible to humans.

There are other causes of odours that the garments according to the present invention may help to mask. For example the following may all cause unpleasant smells that a person may wish to mask with a garment according to the present invention: bromhidrosis, infections of the skin (including tinea cruris/'jock itch' and tinea pedis/'athletes foot'), liver dysfunction or disease (such as fatty liver or cirrhosis) and gut dysbiosis (Type 2 TMAU usually occurs as a result of gut dysbiosis or liver disorders), post-surgical colon colostomies, and other organ deficiencies, such as kidney failure. Other liver enzyme deficiencies (other than FM03, causal of TMAU) may also result in body malodour conditions. Drug interactions may also cause body malodour (for example, sodium phenylbutryrate - used in urea cycle disorders - may be metabolised to butyrate in the body, and cause the odour of 'vomit' to emanate from a person).

An aspect which does not form part of the present invention provides activated carbon for external use adjacent to the skin of a human to adsorb odour caused by a condition of elevated trimethylamine. The condition of elevated trimethylamine is trimethylaminuria (TMAU).

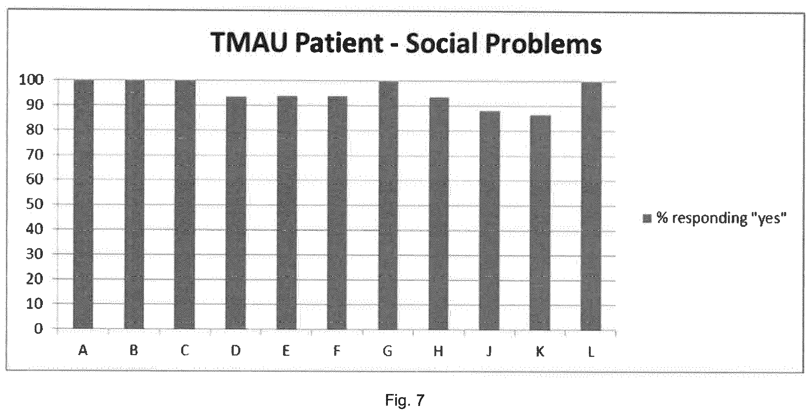

TMAU can be a socially debilitating condition due to the strong negative reactions of others to the patient's body odour. As tabulated in Figure 7, in a survey of 17 patients who tested positive for TMAU (column A) via urinalysis at Sheffield Children's Hospital:

| | |
|---|---|
| • (column B) | 100% have been bullied in the workplace/school because of the disorder (even when colleagues know about the disorder) |
| • (column C) | 100% have found it very difficult to hold down full time, paid work |
| • (column D) | 94% of patient's careers have suffered |
| • (column E) | 94% have suffered moderate or severe depression because of the disorder |
| • (column F) | 95% have considered suicide as a direct result of the disorder |
| • (column G) | 100% feel socially isolated |
| • (column H) | 94% avoid public places and social situations due to the disorder |
| • (column J) | 88% have severe problems forming or maintaining personal relationships |
| • (column K) | 87% are NOT optimistic about the future if therapy is not developed to address their needs, and |
| • (column L) | 100% of TMAU patients consider the disorder chronically debilitating to their way of life. |

The above results are shown in tabular form below:

| Column in Fig. 7 | A | B | C | D | E | F | G | H | J | K | L |
|---|---|---|---|---|---|---|---|---|---|---|---|
| % responding "yes" | 100 | 100 | 100 | 93.75 | 94.12 | 94.12 | 100 | 93.75 | 88.24 | 86.67 | 100 |
| # responding "yes" | 17 | 16 | 16 | 15 | 16 | 16 | 17 | 15 | 15 | 13 | 17 |
| # of responses | 17 | 16 | 16 | 16 | 17 | 17 | 17 | 16 | 17 | 15 | 17 |

Thus, there is a clear need to treat TMAU and/or treat the symptoms of the disease. In this condition, the psychological effects of the pungent odours are the major issue affecting the lives of the patients; other than the odour, patients with TMAU are typically healthy.

Embodiments of clothing made according to the invention were tested by 3 patients suffering from genetic TMAU who do not experience significant head or breath odour (i.e. odour was primarily coming from the patient's body). Each patient wore a top and a pair of shorts made according to the present invention, underneath their regular clothing.

The patients were asked to rate the perceived efficacy of the clothing at supressing body odour. The patients rated the efficacy as 8 out of 10, where 1 is poor and 10 is extremely efficacious.

The patients were asked to rate their confidence levels in social and public situations when wearing the clothing herein described and to compare this to their confidence levels when not wearing the clothing.

When wearing the clothing, the three patients rated their confidence as 8.0±0.7 out of 10, where 1 is very low confidence and 10 is extremely high confidence.

When not wearing the clothing and instead wearing normal clothing, the three patients rated their confidence as 3.33±1.08 out of 10 on the same scale. This is shown in tabular format below.

### Odour Filtering Clothing tested by 3 TMAU-Positive Volunteers

| | **Volunteer 1** | **Volunteer 2** | **Volunteer 3** | Average | Standard error |
|---|---|---|---|---|---|
| Confidence Level in Social and public situations WITHOUT the odour filtering clothing | 3 | 5 | 2 | 3.33 | 1.08 |
| Confidence Level in Social and Public Situations WITH the odour filtering clothing | 7 | 9 | 8 | 8 | 0.707 |

The effectiveness of activated carbon for external use as a treatment for a condition of elevated trimethylamine is thus shown.

Certain embodiments of the present invention will now be described in greater detail by way of example only and with reference to the accompanying drawings in which:
Figure 1A shows a front view of an embodiment of a garment;
Figure 1B shows a rear view of the garment of Figure 1A;
Figure 2A shows a front view of another embodiment of a garment;
Figure 2B shows a rear view of the garment of Figure 2A;
Figure 3 shows a cross-section of the layers used in the garment of Figures 1 and 2;
Figures 4A and 4B show cross-sections of the layers used in the prior art for filtering the odour of flatulence;
Figure 5 shows another embodiment of a garment in the form of socks;

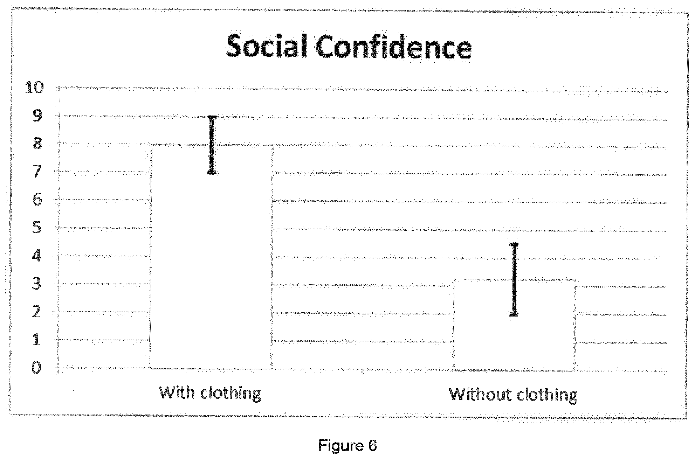

Figure 6 shows a graph of the social confidence felt by patients wearing an embodiment of the present garment; and
Figure 7 shows a graph of the social problems faced by patients with TMAU.

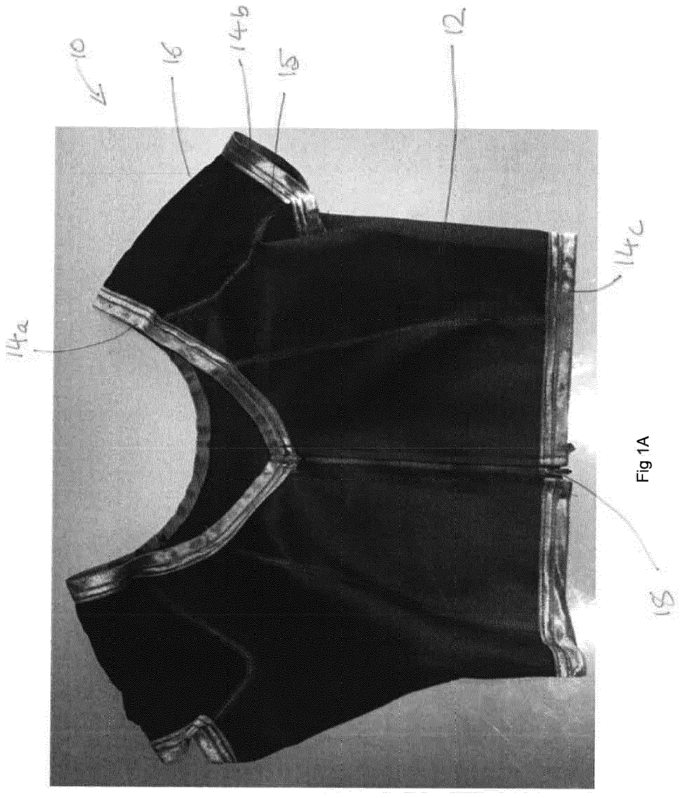

Figure 1A shows a garment 10 for reducing body odour by filtering generated by the wearer's body, such that the odour is not perceptible to the user or other people nearby while the garment is worn.

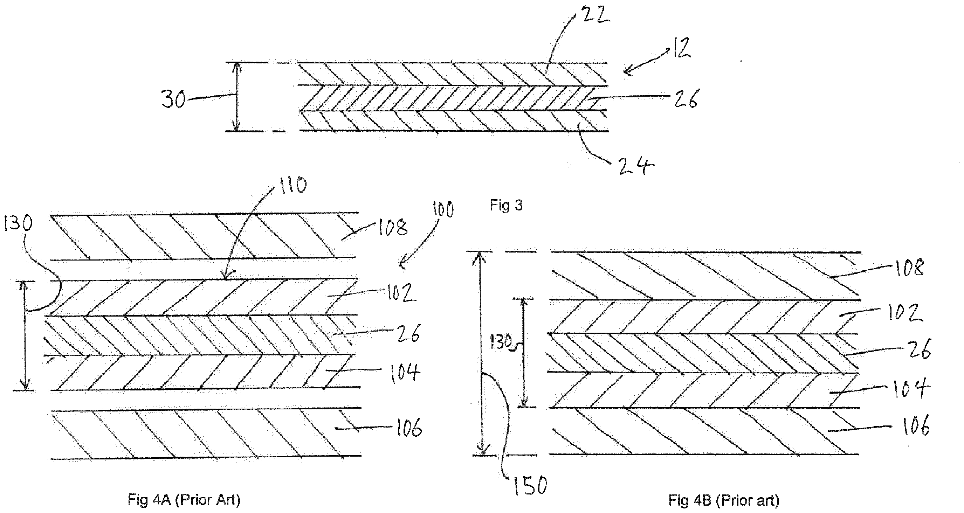

The garment 10 has at least one panel of odour filtering material 12 made of three layers 22, 24, 26, as shown in Figure 3. The odour filtering material 12 contains a layer of activated carbon 26 which filters out the chemicals associated with body odours by adsorbing the odours. The garment 10 may include one or more other panels of fabric 16 that do not have an activated carbon layer, connected to the odour filtering material 12 by suitable seems 15. These other panels of fabric 16 may be used to reduce the weight of the garment, or to influence how warm the garment is to wear, or to increase the flexibility of the garment in certain areas. The panels of fabric 16 are generally more flexible than the at least one panel of odour filtering material 12.

To most effectively reduce body odour, the garment 10 should seal around one or more regions of the wearer's skin, so that all odours generated in that region can only reach the outside by passing through the activated carbon layer 26. However, imperfect sealing may be acceptable to a degree, so that most odours pass through the activated carbon layer 26. In this case, the wearer and those around the wearer may perceive some body odour, but nonetheless reduced compared to not wearing the garment or wearing other garments that do not contain activated carbon.

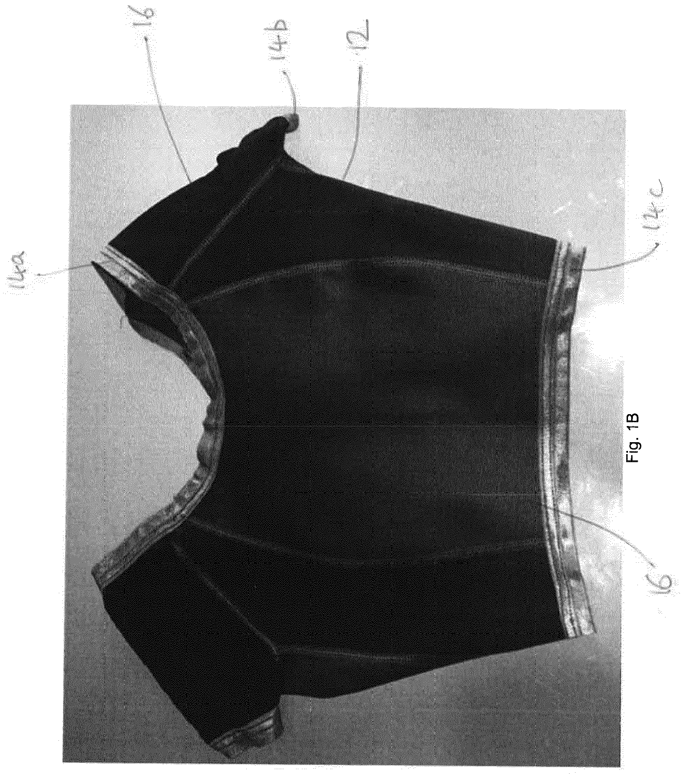

The sealing is effected by elasticated material 14a-f, such as elastane or other standard elastic clothing material. The sealing is performed by elastic 14a-f on all edges of the garment. In the top shown in Figures 1A and 1B, the elasticated edges are at the neckline 14a, the cuffs 14b around the arms (which could be around the wrists in a long sleeved top), and around the torso 14c, all for the prevention of the escape of odour. The seams 15 where the odour filtering material 12 is joined to the non-filtering material layers 16 may provide some additional sealing effect against the wearer's skin.

The garment may have a zip 18 at an appropriate location to assist in putting on the garment. For example the top shown in Figure 1A has a zip 18 along the front.

In the embodiment of Figures 1A and 1B, most of the top is made with the odour filtering material 12. There is flexible fabric material 16, at least, on the top part of the arm/shoulder region. This can improve the flexibility and comfort of the garment. The top of the shoulder is normally not a region producing much odour. The flexible fabric material 16 may comprise a mesh or the like. The incorporation of a flexible fabric material such as a mesh on the shoulder makes it much easier for the wearer to move more easily, whilst the odour filtering material 12 can serve the purpose of filtering odours, resulting in a synergy between the materials.

In other embodiments, instead of providing odour filtering material on the back of a top such as that shown in Figure 1A, a mesh material may be used, aimed at allowing ventilation and cooling rather than filtering odours. For sportswear, the important region for a top to filter odours is the underarm region.

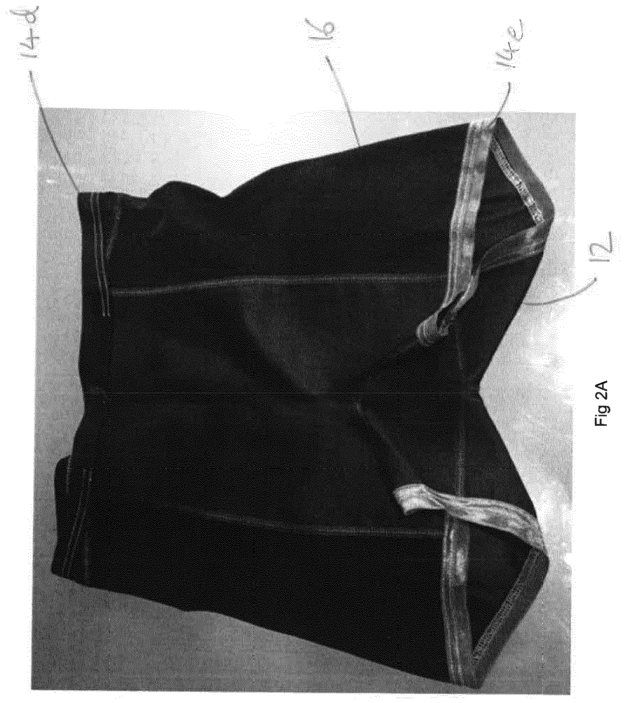

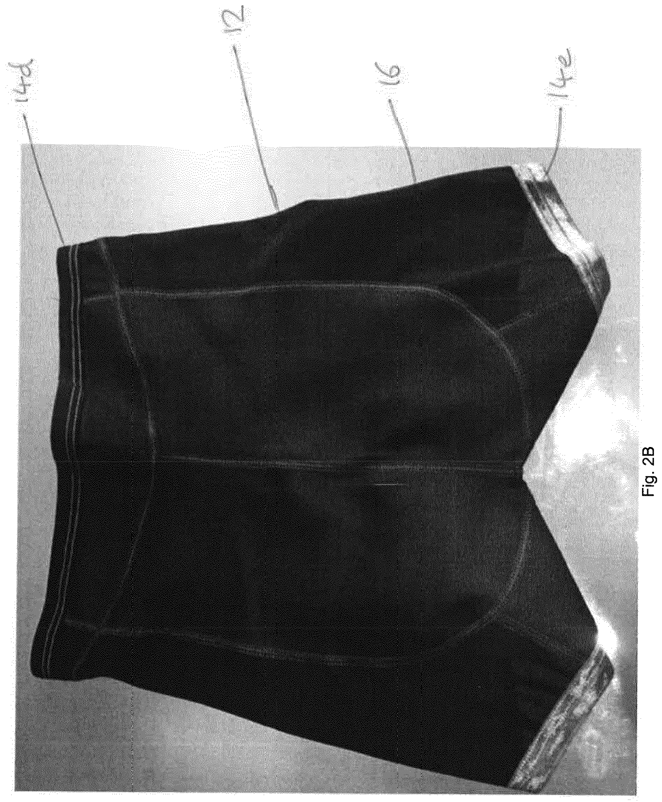

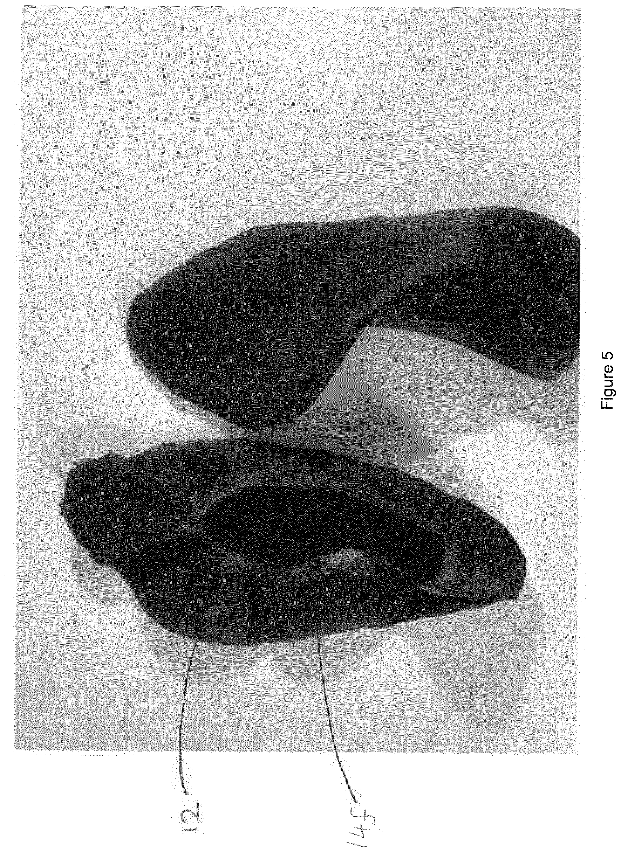

Figure 2 shows shorts according to an embodiment of the invention. In shorts or underwear, the elasticated edges will be around the hips/waist 14d, and around each leg 14e. In a sock embodiment, shown in Figure 5, the elasticated edge 14fis around the ankle/leg and the remainder of the sock comprises the odour filtering material 12.

In another embodiment, the garment is in the form of a one-piece shape, for example having a configuration of a known "wetsuit" type. The one-piece garment may include a portion for at least partly covering the legs (optionally down to the ankles or to the mid-thigh) and a portion for covering the torso up to the neck and extending over the shoulders (optionally either to the wrists or to the mid upper-arm). A zip may be provided at the front or back to allow the user to put it on. It is envisaged that this embodiment would be preferred for use by patients suffering from clinical body odour, such as patients having a condition of elevated trymethylamine, such as TMAU, as the such body odour is not necessarily limited to the under arm/groin as is more generally the case with normal body odours.

Figures 4A and 4B show cross-sections of a known fabric panel 100 used in odour filtering underwear produced by Shreddies^{™}, for filtering flatulence odours. Figure 4A shows a fabric insert 110 positioned between two lycra cotton layers 106, 108 in a loose condition of normal use, with a gap between the fabric insert 110 and each of the outer layers 106, 108. The gaps occur because the fabric insert 110 is connected to the outer layers 106, 108 at its edges and otherwise the fabric insert and the outer layers are not connected to each other. Figure 4B shows the fabric panel 100 with the fabric insert 110 and the outer layers 106, 108 brought into contact with each other, with no gaps, so as to show the overall minimum thickness of the fabric panel.

The known fabric panel 100 is formed of five layers. The central layer 26 is activated carbon. Mesh cotton fabric layers 102, 104 are laminated to each side of the activated carbon 26, to form the fabric insert 110 having a thickness 130. This insert 110 is sewn at its edges to the two lycra cotton layers 106, 108 so as to be positioned therebetween. The lycra layers 106, 108 protect the insert 110 which has a low extensibility before tearing.

The thickness 130 of the insert 110 known from the prior art is about 0.9 mm. The insert 110 is received in a pouch provided by the two outer lycra cotton layers 106, 108, and the thickness 150 of the insert plus the pouch in which it sits is approximately 1.9 mm when measured under ISO 5084.

Figure 3 shows a cross-sectional view of a panel of odour filtering material of a garment being an embodiment of the invention. The odour filtering material is made from three layers 22, 24, 26 having a total thickness 30 in a range of 0.4 to 0.8 mm. The inner layer is activated carbon 26. A polyamide layer 22, 24 is laminated to each side of the activated carbon 26.

The odour filtering material 12 is appreciably thinner than the prior art fabric insert 110. Further, in the embodiments described herein, the odour filtering material 12 forms the entire thickness of the garment, being in contact with a user on its inside surface and forming the outside of the garment on its outside surface and the inside of the garment on its inside surface adjacent the wearer's skin. Thus the total thickness in the range of 0.4 to 0.8 mm is considerably less than the total thickness of the known insert plus pouch of 1.9 mm, shown as dimension 150 in Figure 4B. Thus a garment incorporating an odour filtering material as shown in Figure 3 is very effective at filtering odours whilst also being comfortable.

In the embodiments, the odour filtering material forms the inside of the garment. Thus the garment has no further material inwardly of the odour filtering material. In at least some embodiments, the odour filtering material forms the outside of the garment as well as forming the inside of the garment. These garments have no further material inwardly or outwardly of the odour filtering material.

In one example, the odour filtering material may have a thickness of 0.49±0.009 mm when tested under the ISO 5084 standard for textiles.

Standard BS 4952:1992 for testing elastic fabrics was used to test various odour filtering materials. The test used was one to determine extension at a specified force. Under this test, a 50 mm wide sample of odour filtering material is loaded up to a desired force at a rate of 500 mm/min. Once the desired force is reached, the load is cycled down to zero (at the same rate) and back up to the desired force (at the same rate). Then the elongation of the sample of the odour filtering material is measured and converted into a percentage based on the original sample length, which is 100 mm. The fabrics results herein were tested with a weight of 2 kg (i.e. 19.6 N).

Using this test, it was found that an example odour filtering material has an extension of 47.3 % under a 2 kg load in a first direction and an extension of 8.3 % under a 2 kg load in a second direction, perpendicular to the first direction. Thus, in at least one direction, it stretches by more than 20%. The high extensibility is particularly useful for a garment as it allows the garment to conform to the movements of the user, including during running or other exercise.

For a 50 mm wide sample of the odour filtering material with a thickness of 0.49 mm, the cross sectional area is 24.5 mm². This data, combined with the extension and loading can be converted into a quasi-Young's modulus for the odour filtering material. This is a quasi-Young's modulus only and not a true Young's modulus because this test does not measure the Young's modulus of the fibres themselves, but measures a combination of the fibres and the fabric structure (such as the weave used and the amount of crimp). The quasi-Young's Modulus may be considered to be 0.17 kg/mm² for the odour filtering material in the first direction.

The standard BS 4952:1992 also provides testing methods for residual extension. In fabrics, this is somewhat similar to plastic deformation (i.e. non-recoverable stretching) in e.g. metals; however this test differs as the deformation may not be permanent but may recover in time (longer than the time taken for testing). The test for residual extension begins by performing the test for determining extension at a specified force, as above. After that test has been performed, the specified load is maintained for 10 seconds and then the force is lowered to zero over 7.5 seconds. The sample is removed from the clamps and laid flat for 1 minute. After 1 minute has elapsed, the length of the sample is measured and compared to the original (pre-loading) sample length.

Under the same standard and testing procedure, the example odour filtering material shows a 5.2 % residual extension after 1 minute of load in the first direction and 0.8 % residual extension in the second direction. This data is shown in tabular form below. It is desirable in clothing for this value to be fairly low. Large values for residual extension would make the clothing feel "baggy" and loose as it would not return quickly (or possibly, not at all) to its original size after being stretched by movement of the wearer.

| Example Odour Filtering Material | First direction | Second direction |
|---|---|---|
| Extension under 2 kg load | 47.3 % | 8.3 % |
| Residual extension after 1 minute | 5.2 % | 0.8 % |
| Thickness | 0.49 mm | |

| The results for other fabrics tested using BS 4952:1992 are given below: | | |
|---|---|---|
| Zorflex FM 30K D1J1 | First direction | Second direction |
| Extension under 2 kg load | 15.6 % | No-stretch |
| Residual extension after 1 minute | 3.5 % | No-stretch |
| Thickness | 0.37 mm | |

| Odour filtering pyjama lining produced by Shreddies^{™} | First direction | Second direction |
|---|---|---|
| Extension under 2 kg load | 12 % | No-stretch |
| Residual extension after 1 minute | 5.3 % | No-stretch |
| Thickness | 0.61 mm | |

| Odour adsorbing underwear insert produced by Shreddies^{™} | First direction | Second direction |
|---|---|---|
| Extension under 2 kg load* | 83.8 % | 10.2 % |
| Residual extension after 1 minute* | 16.3 % | 4.0 % |
| Thickness** | 0.9 mm | |

| | | |
|---|---|---|
| * The insert is an odour filtering material which consists of a carbon fibre layer, laminated on each side with cotton mesh, and in the underwear the insert is contained in a protective Lycra pouch providing inner and outer layers of the underwear. The stretch measurements are for the insert, once removed from the pouch. ** The underwear thickness is 1.92 mm, including the pouch material. The insert has a thickness of 0.9 mm. | | |

Below are presented further suitable activated carbon composite fabrics that may be used to make garments for filtering body odour of a person. The fabrics are referred to by a technical numbering system in which:
F5/F3/P8/ST -refers to various inner activated carbon knitted cloths. 'F5', 'F3' and 'ST' refer to activated carbon material made from viscose precursor material of 130 g/m2, 100 g/m2 and 130 g/m2 respectively; whereas 'P8' refers to a synthetic inner activated carbon material, made from the precursor material PAN (Polyacrylonitrile, a synthetic polymer material) of 120 gsm.

+ P3/T5/T5D - refers to outer cloths which are bonded to the inner carbon layer to form the overall composite material. Specifically, `+ P3'is a polyamide knit material; + 'T5' is a polyester and polyamide mix knit material; + 'T5D' is a polyester knit material. All the described outer cloths are within the range of 30-80 gsm.

| F5 + P3 | First direction | Second direction |
|---|---|---|
| Extension under 2 kg load | 11 % | 35.4 % |
| Residual extension after 1 minute | 2 % | 5 % |
| Thickness | 0.78 mm | |

| F5 + T5D | First direction | Second direction |
|---|---|---|
| Extension under 2 kg load | 6.5 % | 43.6 % |
| Residual extension after 1 minute | 1 % | 6.5 % |
| Thickness | 0.79 mm | |

| F3 + P3 | First direction | Second direction |
|---|---|---|
| Extension under 2 kg load | 5.8 % | 33.8 % |
| Residual extension after 1 minute | 2 % | 5 % |
| Thickness | 0.74 mm | |

| F3 + T5 | First direction | Second direction |
|---|---|---|
| Extension under 2 kg load | 24.1 % | 5.4 % |
| Residual extension after 1 minute | 4 % | 1.5 % |
| Thickness | 0.79 mm | |

| ST + P3 | First direction | Second direction |
|---|---|---|
| Extension under 2 kg load | 11.3 % | 42.3 % |
| Residual extension after 1 minute | 1.5 % | 8.5 % |
| Thickness | 0.69 mm | |

| P8 + P3 | First direction | Second direction |
|---|---|---|
| Extension under 2 kg load | 27.1 % | 5.5 % |
| Residual extension after 1 minute | 2 % | 3.1 % |
| Thickness | 0.57 mm | |

| P8 + T5D | First direction | Second direction |
|---|---|---|
| Extension under 2 kg load | 31 % | 3.8 % |
| Residual extension after 1 minute | 4.5 % | 1.5 % |
| Thickness | 0.79 mm | |

The material used in the Shreddies^{™} underwear is stored in a protective lyrca pouch such that the total thickness of the underwear is 1.9mm, which is particularly thick for clothing, particularly underwear. This is because the insert material is enclosed in the inner and outer layers forming the pouch, which inevitably adds to the minimum thickness of underwear made using this material. Whilst the pouch provides protection for the insert it affects the stretchability of the underwear in the region of the pouch. Thus the stretchability of the insert is not reflective of the stretchability of the combined insert and inner and outer layers of the pouch.

The Zorflex FM 30K D1J1 material has a thickness of 0.37 mm and the Shreddies^{™} pyjamas material has a thickness of 0.61 mm when tested under the ISO 5084 standard for textiles. Whilst these materials are sufficiently thin to be useful in garments, it will be seen from the above test results that they lack the stretchability achieved in the example odour filtering material of the present invention.

The example odour filtering material has a measured basis weight of 216 g/m² when measured under the BS 12127 standard for textiles. The additional examples of suitable odour filtering materials have measured basis weights in the range 240-280 g/m² when measured under the BS 12127 standard for textiles.

## Claims

1. A garment (10) for filtering body odour of a person, the garment comprising an odour filtering material (12) forming the inside of the garment, the odour filtering material consisting of:
an activated carbon layer (26);
a first fabric layer (22) bonded to one side of the activated carbon layer; and **characterised in that**
a second fabric layer (24) is bonded to an opposite side of the activated carbon layer; wherein the thickness (30) of the odour filtering material is equal to or less than 0.8 mm; and
wherein the odour filtering material is configured to stretch by 20% or more in at least one direction when tested as follows:
a 50 mm width by 100 mm length sample of odour filtering material is weighted with a 2 kg load that is applied along the length of the sample to stretch the sample.

2. A garment as claimed in claim 1, wherein the mass per unit area of the odour filtering material (12) is equal to or less than 280 g/m², preferably equal to or less than 250 g/m².

3. A garment as claimed in claim 1 or 2, wherein the odour filtering material (12) is configured to stretch by 60% or less when tested as stated.

4. A garment as claimed in claim 1, 2 or 3, wherein the odour filtering material (12) forms both the inside and the outside of the garment (10).

5. A garment as claimed in any preceding claim, wherein the first fabric layer (22) is a polyamide fabric layer, and/or the second fabric layer (24) is a polyamide fabric layer.

6. A garment as claimed in claim 5, wherein the polyamide is a nylon.

7. A garment as claimed in any preceding claim, comprising at least one elasticated portion (14a-f) for sealing the odour filtering material to the person's body.

8. A garment as claimed in any preceding claim, further comprising a flexible fabric material (16) connected to an edge of the odour filtering material, the flexible fabric material being configured to provide additional flexibility in a region of the garment.

9. A garment as claimed in claim 8, wherein the region is a shoulder region.

10. A garment as claimed in claim 8, wherein the region is an outer thigh region.

11. A garment as claimed in any preceding claim wherein the garment is one of: a top, shorts, long pants, underwear, a sock, a hat, head and face covering, a sports bra, and a one-piece suit configured to cover from thigh, to neck to upper arm of a wearer.

12. A garment as claimed in any preceding claim wherein the garment is a sportswear garment.

13. A garment as claimed in any preceding claim, wherein the thickness (30) of the odour filtering material (12) is equal to or less than 0.7 mm, and
wherein the odour filtering material is configured to stretch by 40% or more in at least one direction when tested as follows:
a 50 mm width by 100 mm length sample of odour filtering material is weighted with a 2 kg load that is applied along the length of the sample to stretch the sample.

14. A method of filtering body odour by using a garment (10) as claimed in any preceding claim.

## Patentansprüche

1. Kleidungsstück (10) zum Filtern von Körpergeruch einer Person, wobei das Kleidungsstück ein geruchsfilterndes Material (12) umfasst, das die Innenseite des Kleidungsstücks bildet, wobei das geruchsfilternde Material besteht aus:
einer Aktivkohleschicht (26);
einer ersten Stoffschicht (22), die an eine Seite der Aktivkohleschicht gebunden ist; und **dadurch gekennzeichnet, dass**
eine zweite Stoffschicht (24) an eine gegenüberliegende Seite der Aktivkohleschicht gebunden ist; wobei die Dicke (30) des geruchsfilternden Materials gleich oder geringer als 0,8 mm ist; und
wobei das geruchsfilternde Material konfiguriert ist, um sich um 20 % oder mehr in mindestens eine Richtung zu dehnen, wenn es wie folgt getestet wird:
eine Probe aus geruchsfilterndem Material mit einer Breite von 50 mm und einer Länge von 100 mm wird mit einer Last von 2 kg beschwert, die entlang der Länge der Probe aufgebracht wird, um die Probe zu dehnen.

2. Kleidungsstück nach Anspruch 1, wobei die Masse pro Flächeneinheit des geruchsfilternden Materials (12) gleich oder kleiner als 280 g/m², vorzugsweise gleich oder kleiner als 250 g/m² ist.

3. Kleidungsstück nach Anspruch 1 oder 2, wobei das geruchsfilternde Material (12) konfiguriert ist, um sich, wenn wie angegeben getestet, um 60 % oder weniger zu dehnen.

4. Kleidungsstück nach Anspruch 1, 2 oder 3, wobei das geruchsfilternde Material (12) beides, die Innenseite und die Außenseite des Kleidungsstücks (10) bildet.

5. Kleidungsstück nach einem vorstehenden Anspruch, wobei die erste Stoffschicht (22) eine Polyamid-Stoffschicht ist und/oder die zweite Stoffschicht (24) eine Polyamid-Stoffschicht ist.

6. Kleidungsstück nach Anspruch 5, wobei das Polyamid Nylon ist.

7. Kleidungsstück nach einem vorstehenden Anspruch, umfassend mindestens einen elastischen Abschnitt (14a-f) zum Abdichten des geruchsfilternden Materials am Körper der Person.

8. Kleidungsstück nach einem vorstehenden Anspruch, weiter umfassend ein flexibles Stoffmaterial (16), das mit einem Rand des geruchsfilternden Materials verbunden ist, wobei das flexible Stoffmaterial konfiguriert ist, um in einem Bereich des Kleidungsstücks zusätzliche Flexibilität bereitzustellen.

9. Kleidungsstück nach Anspruch 8, wobei der Bereich ein Schulterbereich ist.

10. Kleidungsstück nach Anspruch 8, wobei der Bereich ein äußerer Oberschenkelbereich ist.

11. Kleidungsstück nach einem vorstehenden Anspruch, wobei das Kleidungsstück eines ist aus: einem Oberteil, kurzen Hosen, langen Hosen, Unterwäsche, einer Socke, einem Hut, Kopf- und Gesichtsbedeckung, einem Sport-BH, und einem einteiligen Anzug, der konfiguriert ist, um vom Oberschenkel bis zum Hals bis zum Oberarm eines Trägers zu bedecken.

12. Kleidungsstück nach einem vorstehenden Anspruch, wobei das Kleidungsstück ein Sportkleidungsstück ist.

13. Kleidungsstück nach einem vorstehenden Anspruch, wobei die Dicke (30) des geruchsfilternden Materials (12) gleich oder geringer als 0,7 mm ist, und
wobei das geruchsfilternde Material konfiguriert ist, um sich um 40 % oder mehr in mindestens eine Richtung zu dehnen, wenn es wie folgt getestet wird:
eine Probe aus geruchsfilterndem Material mit einer Breite von 50 mm und einer Länge von 100 mm wird mit einer Last von 2 kg beschwert, die entlang der Länge der Probe aufgebracht wird, um die Probe zu dehnen.

14. Verfahren zum Filtern von Körpergeruch durch Verwenden eines Kleidungsstücks (10) nach einem vorstehenden Anspruch

## Revendications

1. Vêtement (10) permettant de filtrer une odeur corporelle d'une personne, le vêtement comprenant une matière de filtration d'odeur (12) formant l'intérieur du vêtement, la matière de filtration d'odeur consistant en:
une couche de charbon actif (26) ;
une première couche de tissu (22) collée à un côté de la couche de charbon actif ; et **caractérisé en ce que**
une seconde couche de tissu (24) est collée à un côté opposé de la couche de charbon actif; dans lequel l'épaisseur (30) de la matière de filtration d'odeur est inférieure ou égale à 0,8 mm ; et
dans lequel la matière de filtration d'odeur est configurée pour s'étirer de 20 % ou plus dans au moins une direction lorsqu'elle est testée comme suit :
un échantillon de 50 mm de largeur sur 100 mm de longueur de la matière de filtration d'odeur est lesté d'une charge de 2 kg qui est appliquée sur toute la longueur de l'échantillon de manière à étirer l'échantillon.

2. Vêtement selon la revendication 1, dans lequel la masse par unité de surface de la matière de filtration d'odeur (12) est inférieure ou égale à 280 g/m², de préférence inférieure ou égale à 250 g/m².

3. Vêtement selon la revendication 1 ou 2, dans lequel la matière de filtration d'odeur (12) est configurée pour s'étirer de 60 % ou moins lorsqu'elle est testée comme indiqué.

4. Vêtement selon la revendication 1, 2 ou 3, dans lequel la matière de filtration d'odeur (12) forme à la fois l'intérieur et l'extérieur du vêtement (10).

5. Vêtement selon une quelconque revendication précédente, dans lequel la première couche de tissu (22) est une couche de tissu en polyamide et/ou la seconde couche de tissu (24) est une couche de tissu en polyamide.

6. Vêtement selon la revendication 5, dans lequel le polyamide est un nylon.

7. Vêtement selon une quelconque revendication précédente, comprenant au moins une partie élastiquée (14a-f) destinée à ajuster de manière étanche la matière de filtration d'odeur au corps d'une personne.

8. Vêtement selon une quelconque revendication précédente, comprenant en outre une matière en tissu souple (16) reliée à un bord de la matière de filtration d'odeur, la matière en tissu souple étant configurée pour fournir une souplesse supplémentaire dans une région du vêtement.

9. Vêtement selon la revendication 8, dans lequel la région est une région d'épaule.

10. Vêtement selon la revendication 8, dans lequel la région est une région extérieure de la cuisse.

11. Vêtement selon une quelconque revendication précédente, dans lequel le vêtement est l'un parmi : un haut, un short, un pantalon long, un sous-vêtement, une chaussette, un chapeau, un couvre-chef et un couvre-visage, un soutien-gorge de sport et une combinaison d'une pièce configurée pour couvrir un utilisateur des cuisses au cou, y compris le haut des bras.

12. Vêtement selon une quelconque revendication précédente, dans lequel le vêtement est un vêtement de sport.

13. Vêtement selon une quelconque revendication précédente, dans lequel l'épaisseur (30) de la matière de filtration d'odeur (12) est inférieure ou égale à 0,7 mm, et
dans lequel la matière de filtration d'odeur est configurée pour s'étirer de 40 % ou plus dans au moins une direction lorsqu'elle est testée comme suit :
un échantillon de 50 mm de largeur sur 100 mm de longueur de la matière de filtration d'odeur est lesté d'une charge de 2 kg qui est appliquée sur toute la longueur de l'échantillon de manière à étirer l'échantillon.

14. Procédé de filtration d'odeur corporelle au moyen d'un vêtement (10) selon une quelconque revendication précédente.
